# EUROPEAN PATENT SPECIFICATION

(11) **EP 1 790 122 B1**
(45) Date of publication and mention of the grant of the patent: **01.08.2012**
(21) Application number: 05783347.7
(22) Date of filing: 01.09.2005
(51) Int. Cl.: H04L 12/24

(54) **NETWORK MANAGEMENT SYSTEM CONFIGURING**
KONFIGURIEREN EINES NETZWERK-VERWALTUNGSSYSTEMS
METHODE DE CONFIGURATION D'UN SYSTEME DE GESTION DE RESEAU

(30) Priority: 02.09.2004 US 607144 P
(43) Date of publication of application: 30.05.2007
(73) Proprietor: PacketFront Software Solutions AB, 164 28 Kista (SE)
(72) Inventor: LUNDSTRÖM, Magnus, S-121 52 Johanneshov (SE); SKÄRE, Tomas, 136 43 Haninge (SE)
(74) Representative: Holmberg, Nils Anders Patrik
(86) International application number: PCT/SE2005/001262
(87) International publication number: WO 2006/025788

(56) References cited:
- US-A1- 2002 188 701
- US-A1- 2003 229 686
- US-A1- 2004 128 370
- US-A1- 2004 195 313
- US-B1- 6 728 723
- US-B1- 6 760 761
- COUCH A ET AL: "On observed reproducibility in network configuration management", SCIENCE OF COMPUTER PROGRAMMING, ELSEVIER SCIENCE PUBLISHERS BV., AMSTERDAM, NL, vol. 53, no. 2, 1 November 2004 (2004-11-01), pages 215-253, XP004566813, ISSN: 0167-6423, DOI: DOI:10.1016/J.SCICO.2004.04.002

## Description

### Technical field

The present invention pertains to a network management system, in a broadband network, configuring and updating network elements through a command language, and a method therefore.

### Background art

Network elements such as routers, switches, multiplexers, and other equipment to be controlled in a network are managed and controlled through a configuration language. To control the network element devices, commands corresponding to certain syntax are entered. A command executes a function in a controlled network element device. Commands may often have one or multiple parameters to control specifics of the function. For instance, a command may be utilized to turn on the fans in a network element. A parameter to the command may be the temperature that must be reached before the fans are turned on.

A person is able to interpret documentation and understand the functionality of the command syntax as well as to react to any unexpected behaviour detected when the command is executed. Such unexpected behaviour may be invalid command syntaxes, or utilizing a parameter that is not available in the particular system.

If the functionality and configuration of network elements instead is controlled by software, the human interactivity is no longer a factor. The software is able to operate only under the constraints or with the flexibility designed into the system. If the command syntax changes from one version of network element image to another, a management software application may have to be rewritten in order to understand the new syntax. As the number of elements and versions of system images running on those elements increase, the complexity for a network management system (NMS) to manage becomes increasingly complex and unmanageable.

A NMS is utilized to manage portions of a network by talking to network agents residing in nodes via a protocol. The NMS implements functions at the network management layer, and can manage other MNS.

US-A1-2004/195313 discloses a method for registering network information in a mobile terminal using a smart card.

US-A1-2003/229686 discloses a change management system to synchronize the configuration of network management applications.

US-B1-6 728 723 discloses a method for verifying router configuration transactions carried out by a centralised information provider or data base system.

US-B1-6 760 761 describes a system and method for network management, in particular for standardizing network devices by means of using a policies data base.

### Summary of the invention

One aim of the present invention among others is to solve problems related to changed configurations through new syntaxes as the number of network element devices and versions of system images running on those elements increase. The complexity for a network management system to manage becomes increasingly complex and unmanageable under such circumstances. Hence, the present invention introduces that only parts of management software have to be changed when updating network element configurations.

Current configurations changes are accomplished by a programmer (person for hand) writing a new program. The present invention introduces an interpreter, which automatically changes a devices configuration through being given new values for variables.

To achieve aims and goals, the present invention sets forth a network management system, in a broadband network, configuring and updating network elements through a command language. The system thus comprises:
a defined syntax for configuration of the network elements;
compilation of the syntax definition into a machine readable form, deployed in the network element to configure the element, and further stored in a data file in the management system, thus having stored an exact configuration version copy running in a network element also in the management system;
a software interpreter comprised of describing text, having limits for every variable in a syntax field, and how this should be changed, said interpreter utilizing a dynamic library, which is connected to every network element (12), and the type of software, said compiled syntax source code file constitutes said library, which defines the command statements, and said interpreter creating a difference file for new configuration versions in said element (12);
verifying the new configuration versions in the management system by changing the stored data file in accordance with data in the difference file, and
deployment of the new configuration version in the network element, thus performing configuration updating on network elements utilizing the main part of earlier configuration.

One embodiment of the present invention comprises that the new configuration is utilized in verifying that the command semantics and syntax is correct.

Another embodiment comprises that multiple ways of writing a statement exists, thus normalising the statement to a common syntax.

A further embodiment comprises a change of command statements to reach a defined goal, thus recognizing that different commands are similar, but having different parameters.

Yet another embodiment comprises that groupings of commands are recognized so that in order to address configuration related to a specific context, the context is provided before the command lines configuring that context in a running configuration.

Yet still a further embodiment comprises that the steps of normalisation and verification of commands to be deployed is made without the actual network element being online and reachable.

Moreover, the present invention comprises a method in a network management system residing in a broadband network, configuring and updating network elements through a command language. The method comprises:
defining a syntax for configuration of the network elements;
compiling of the syntax definition into a machine readable form, deployed in the network element to configure the element, and further stored in a data file in the management system, thus having stored an exact configuration version copy running in a network element also in the management system;
creating a difference file for new configuration versions through a software interpreter in said element (12) comprised of describing text, having limits for every variable in a syntax field, and how this should be changed, said interpreter utilizing a dynamic library, which is connected to every network element (12), and the type of software, said compiled syntax source code file constitutes said library, which defines the command statements verifying the new configuration versions in the management system by changing the stored data file in accordance with data in the difference file, and
deploying the new configuration version in the network element, thus performing configuration updating on network elements utilizing the main part of earlier configuration software.

The method of the present invention is able to perform embodiments of the above described system embodiments in accordance with the attached dependent method claims.

### Brief description of the drawing

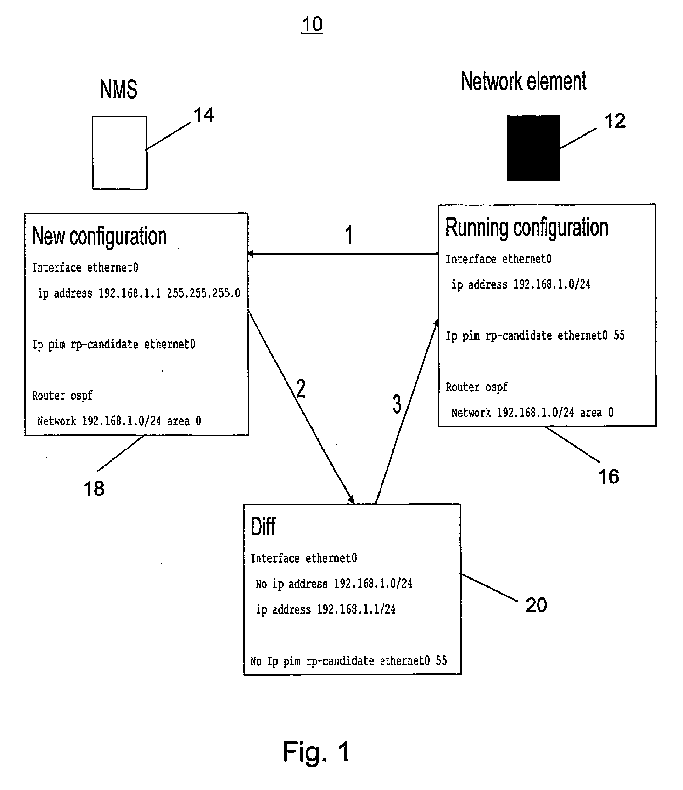

Henceforth, reference is had to the accompanying single drawing of Fig. 1 for a better understanding of the present invention with its embodiments and given examples, wherein the single figure:
Fig. 1 schematically illustrates a configuration of a network element controlled by an NMS in accordance with the present invention.

### Detailed description of preferred embodiments

The present invention introduces that only parts of management software have to be changed when updating network element configurations. Network elements are such devices as routers, switches, multiplexers, and other equipment aimed to handle transfer of data packets in a broadband network, which are software configured.

In the following description, command syntaxes are highlighted through bold characters.

### Example of a command syntax:

**[no] ip pim rp-candidate <interface> [ <0-255> ]**
Syntax word list
**ip -** internet protocol
**pim -** protocol independent multicast. Enabling IP multicast on existing IP networks
**rp**-candidate -rendevouz point candidate

This type of command syntax is commonly used in documentations to teach for instance programmers how to utilize the command. Brackets [ ], in this example, indicate optional parameters, and the separate signs <> are used to indicate a textual variable input, in this case the name of an interface in the system. Such a command syntax definition implies multiple possible combinations in utilizing the command:
**no ip pim rp-candidate ethernet0**
**no ip pim rp-candidate ethernet0 0**
**ip pim rp-candidate ethernet0**
**ip pim rp-candidate ethernet0 0**

The resulting action of the command is different depending on which combination utilized. The **no** keyword implies that the command functionality should be returned to its default, but if there are multiple parameters to the command (such as both the interface name and the numeric value) the **no** keyword may remove the complete command or only part of the functionality. This is decided by the network element vendor and varies from element to element and vendor to vendor.

It is appreciated that the syntax provided is an example, and that other variables could be utilized for a configuration.

A user or programmer is able to interpret the documentation and understand the functionality of the command syntax as well as to react to any unexpected behaviour detected when the command is executed. One such unexpected behaviour may be invalid command syntax (**ip pmi rp-candidate**) or using a parameter (**ethernet0**) that is not available in the particular system (should for instance be **fastethernet0**).

If the functionality and configuration 10 of network elements 12 instead is controlled by software as in the present invention schematically depicted in Fig. 1, the interactivity by programmers is no longer a factor. The software is able to operate only under the constraints or with the flexibility designed into the system. If the command syntax changes from one version of network element image to another, a management software application may need to be rewritten in order to understand the new syntax. As the number of elements and versions of system images running on those elements increase, the complexity for a network management system 14 to manage becomes increasingly complex and unmanageable.

A developed command description language and method is set forth through the present invention, Fig. 1, where the command syntax of an element is defined. The definition is then compiled into machine readable form and deployed both into the network element 12 and as a data file that can be used by a network management station 14. The data file is unique to each version of the system image 16 running in the network element 12.

The command structure of the data file is stored in dynamically loaded libraries, which means that the NMS 14 is able to handle new commands regarding new versions of network element software without inducing any changes to the software.

According to the present invention, the content of the data file enables the network management system 14 to perform verification, normalisation and differentiation of command statements through a software interpreter. This solves two problems, firstly to ensure that the command statements kept in the network management system to be deployed into the network is accurate and valid, it is actually a working configuration. Secondly, to optimize command updates so that only necessary .commands are deployed to the network element instead of a completely new configuration that may require restart of applications or functions in the network element.

The software interpreter of the present invention is comprised of describing text, having limits for every variable in a syntax field, and how this should be changed and/or removed. For this purpose, the interpreter utilizes a dynamic (changeable or updated) library, which is connected to every network element 12, and the type of software. A compiled source code file constitutes the library, which defines/equals the command statements.

According to the solution of the present invention, the Network Management System 14 has communication with a Network Element 12. The NMS knows the configuration, consisting of command statements from the library controlled by the NMS software interpreter as exemplified 16, 18 in Fig.1, and parameters' running in the network element as the NMS has previously deployed the configuration 16 to the network element 12. A configuration change 18 is initialized by the NMS. In this example, the address on the ethernet0 interface changes from 192.168.1.0 to 192.168.1.1. The metric value **55** used with **ip pim rp-candidate** is removed but the **rp-candidate** will remain on **ethernet0**. Through the content of the data file generated by the present invention, the NMS 14 is able to accomplish the following; go through the new configuration 18 verifying that the command semantics and syntax is correct. Where multiple ways of writing a statement exists, normalise the statement to a common syntax (ip address 192.168.1.1 with netmask 255.255.255.0 can also be written as 192.168.1.1/24, two ways of providing a similar objective. A possible time consuming task for programmers, but difficult to make software understand it. Understand or recognize how to change command statements to reach a defined goal (understanding that the **ip pim rp-candidate ethernet0 55** and **ip pim rp-candidate ethernet0** are the same commands but with different parameters and that in order to remove only the **55** parameter but to retain the rest of the command the **no** keyword is applied on the command line. If the entire line was to be removed, a different command would have been issued (**no ip pim rp-candidate ethernet0**). Recognize groupings of commands so that in order to address configuration related to a certain context **(interface ethernet0**) the context must be provided before the command lines configuring that context. The steps of normalisation and verification of the commands to be deployed can be made without the actual network element being online and reachable. Because the NMS has what essentially is an exact copy of the command language used on the element, configuration and commands can be prepared before the unit is even installed in the network. Hence, this is accomplished by the interpreter of the present invention as described above.

Thereby the NMS 14, through its software interpreter, is able to generate a difference 20 between the running configuration 16 and the new configuration 18. The difference 20 provided by the interpreter contains the exact configuration commands required to convert the running configuration 16 into the new configuration 18 without having to completely rewrite the entire configuration to the network element 16.

The Diff field 20 contains the exact command statements, as determined by the NMS 14 copy data file in the library of the running configuration data and verification functions, required to make the running configuration into the new configuration.

The present invention is not restricted to its described embodiments and given examples. The attached claims do suggest further embodiments to a person skilled in the art.

## Claims

1. A network management system (14) residing in a broadband network, said system (14) configuring and updating a network element (12) through a command language defining a syntax for configuration of said network element (12) and compiling said syntax into a machine readable form, deployed in said network element (12) to configure said network element (12), and stored in a data file in said network management system (14), thus having stored an exact configuration version copy running in the network element (12) also in said network management system (14),
**characterised by**
- using a software interpreter for automatically changing the configuration of said network element (12) through the command language, where the software interpreter utilizes a dynamic library, which library is connected to said network element (12), where a compiled source code file constitutes the library, which defines command statements,
- changing only part of a management software when updating network element configurations, and deploying only necessary commands (20) to the network element (12) instead of a completely new configuration (18) that may require restart of applications or functions in the network element (12).

2. The system according to claim 1, **characterised by**
- going through the new configuration (18) to verify that the command semantics and syntax is correct.

3. The system according to claim 1, **characterised by**
- recognizing groupings of commands so that in order to address configuration related to a specific context, the context is provided before the command lines configuring that context in a running configuration.

4. The system according to claim 1, **characterised by**
that steps of normalisation and verification of commands to be deployed is made without the actual network element (12) being online and reachable.

5. A method in a network management system (14) residing in a broadband network, comprising:
- configuring and updating a network element (12) through a command language, defining a syntax for configuration of said network elements (12),
- compiling said syntax into a machine readable form, deployed in said network element (12) to configure said network element (12), and stored in a data file in said network management system (14), thus having stored an exact configuration version copy running in the network element (12) also in said network management system (14),
**characterised by** the steps of:
- using a software interpreter for automatically changing the configuration of said network element (12) through the command language, where the interpreter utilizes a dynamic library, which library is connected to the network element (12), where a complied source code constitutes the library, which defines the command statements,
- changing only part of a management software when updating network element configurations, and deploying only necessary commands (20) to the network element (12) instead of a completely new configuration (18) that may require restart of applications or functions in the network element (12).

6. The method according to claim 5, **characterised by** the further step of:
- going through the new configuration to verify that the command semantics and syntax is correct.

7. The method according to claim 5, **characterised by** the further steps of:
- recognizing groupings of commands so that in order to address configuration related to a specific context, the context is provided before the command lines configuring that context in a running configuration.

8. The method according to claim 5, **characterised by** the further step of:
- normalization and verification of commands to be deployed without the actual network element being online and reachable.

## Patentansprüche

1. Netzwerk-Verwaltungssystem (14), das in einem Breitbandnetzwerk angesiedelt ist, wobei das System (14) ein Netzwerkelement (12) durch eine Befehlssprache, die eine Syntax für die Konfiguration des Netzwerkelements (12) bereitstellt, konfiguriert und aktualisiert und die Syntax in eine maschinenlesbare Form kompiliert, die in das Netzwerkelement (12) ausgebracht ist, um das Netzwerkelement (12) zu konfigurieren, und in einer Datendatei in dem Netzwerk-Verwaltungssystem (14) gespeichert ist, das auf diese Weise eine exakte Konfigurationsversionskopie, die in dem Netzwerkelement (12) läuft, auch in dem Netzwerk-Verwaltungssystem (14) gespeichert hat, **gekennzeichnet durch**:
- Verwendung eines Software-Interpreters zum automatischen Ändern der Konfiguration des Netzwerkelements (12) durch die Befehlssprache, wobei der Software-Interpreter eine dynamische Bibliothek verwendet, wobei diese Bibliothek mit dem Netzwerkelement (12) verbunden ist, wobei eine kompilierte Quellcodedatei die Bibliothek bildet, die Befehlsaussagen definiert,
- Ändern nur eines Teils einer Verwaltungssoftware, wenn Netzwerkelementkonfigurationen aktualisiert werden, und Ausbringen nur notwendiger Befehle (20) an das Netzwerkelement (12) anstelle einer komplett neuen Konfiguration (18), die einen Neustart von Anwendungen oder Funktionen in dem Netzwerkelement (12) erfordern kann.

2. System nach Anspruch 1, **gekennzeichnet durch**:
- Durchgehen der neuen Konfiguration (18) um zu verifizieren, dass die Befehlssemantik und die Syntax korrekt sind.

3. System nach Anspruch 1, **gekennzeichnet durch**:
- Erkennen von Gruppierungen von Befehlen, so dass, um eine auf einen spezifischen Kontext bezogene Konfiguration anzusprechen, in einer laufenden Konfiguration der Kontext vor den Befehlszeilen, die diesen Kontext konfigurieren, bereitgestellt wird.

4. System nach Anspruch 1, **dadurch gekennzeichnet, dass**:
die Schritte der Normalisierung und Verifizierung von Befehlen, die ausgebracht werden sollen, durchgeführt werden, ohne dass das tatsächliche Netzwerkelement (12) online und erreichbar ist.

5. Verfahren in einem Netzwerk-Verwaltungssystem (14), das sich in einem Breitbandnetzwerk angesiedelt ist, das aufweist:
- Konfigurieren und Aktualisieren eines Netzwerkelements (12) durch eine Befehlssprache, die eine Syntax für die Konfiguration des Netzwerkelements (12) bereitstellt,
- Kompilieren der Syntax in eine maschinenlesbare Form, die in das Netzwerkelement (12) ausgebracht wird, um das Netzwerkelement (12) zu konfigurieren, und die in einer Datendatei in dem Netzwerk-Verwaltungssystem (14) gespeichert ist, das auf diese Weise eine exakte Konfigurationsversionskopie, die in dem Netzwerkelement (12) läuft, auch in dem Netzwerk-Verwaltungssystem (14) gespeichert hat, **gekennzeichnet durch** die folgenden Schritte:
- Verwenden eines Software-Interpreters zum automatischen Ändern der Konfiguration des Netzwerkelements (12) durch die Befehlssprache, wobei der Interpreter eine dynamische Bibliothek verwendet, wobei diese Bibliothek mit dem Netzwerkelement (12) verbunden ist, wobei ein kompilierter Quellcode die Bibliothek bildet, die Befehlsaussagen definiert,
- Ändern nur eines Teils einer Verwaltungssoftware, wenn Netzwerkelementkonfigurationen aktualisiert werden, und Ausbringen nur notwendiger Befehle (20) an das Netzwerkelement (12) anstelle einer komplett neuen Konfiguration (18), die einen Neustart von Anwendungen oder Funktionen in dem Netzwerkelement (12) erfordern kann.

6. Verfahren nach Anspruch 5, **gekennzeichnet durch** den weiteren Schritt:
- Durchgehen der neuen Konfiguration um zu verifizieren, dass die Befehlssemantik und die Syntax korrekt sind.

7. Verfahren nach Anspruch 5, **gekennzeichnet durch** den weiteren Schritt:
- Erkennen von Gruppierungen von Befehlen, so dass, um eine auf einen spezifischen Kontext bezogene Konfiguration anzusprechen, in einer laufenden Konfiguration der Kontext vor den Befehlszeilen, die diesen Kontext konfigurieren, bereitgestellt wird.

8. Verfahren nach Anspruch 5, **gekennzeichnet durch** den weiteren Schritt:
Normalisieren und Verifizieren von Befehlen, die ausgebracht werden sollen, ohne dass das tatsächliche Netzwerkelement online und erreichbar ist.

## Revendications

1. Système de gestion de réseau (14) résidant dans un réseau à large bande, ledit système (14) configurant et mettant à jour un élément de réseau (12) via un langage de commande définissant une syntaxe pour la configuration dudit élément de réseau (12) et compilant ladite syntaxe sous une forme lisible par ordinateur, déployée dans ledit élément de réseau (12) afin de configurer ledit élément de réseau (12), et stockée dans un fichier de données dans ledit système de gestion de réseau (14), ayant ainsi une copie de version de configuration exacte stockée fonctionnant dans l'élément de réseau (12) également dans ledit système de gestion de réseau (14), **caractérisé par** les étapes :
- utiliser un interpréteur de logiciel pour changer automatiquement la configuration dudit élément de réseau (12) via le langage de commande, où l'interpréteur de logiciel utilise une bibliothèque dynamique, laquelle bibliothèque est connectée audit élément de réseau (12), où un fichier de code source compilé constitue la bibliothèque, qui définit des instructions de commande,
- changer uniquement une partie d'un logiciel de gestion lors de la mise à jour des configurations de l'élément de réseau, et le déploiement uniquement des commandes nécessaires (20) à l'élément de réseau (12) plutôt qu'une configuration totalement nouvelle (18) qui pourrait exiger un redémarrage des applications ou des fonctions dans l'élément de réseau (12).

2. Système selon la revendication 1, **caractérisé par**
- examiner la nouvelle configuration (18) pour vérifier que la sémantique et la syntaxe de commande sont correctes.

3. Système selon la revendication 1, **caractérisé par**
- reconnaitre des groupes de commandes de sorte que, pour adresser une configuration liée à un contexte spécifique, le contexte est fourni avant les lignes de commande configurant ce contexte dans une configuration de fonctionnement.

4. Système selon la revendication 1, **caractérisé en ce que**
- des étapes de normalisation et de vérification de commandes à déployer sont réalisées sans que l'élément de réseau réel (12) soit en ligne et accessible.

5. Procédé dans un système de gestion de réseau (14) résidant dans un réseau à large bande, comprenant les étapes:
- configurer et mettre à jour un élément de réseau (12) via un langage de commande, définissant une syntaxe pour la configuration dudit élément de réseau (12),
- compiler ladite syntaxe sous une forme lisible par ordinateur, déployée dans ledit élément de réseau (12) pour configurer ledit élément de réseau (12), et stockée dans un fichier de données dans ledit système de gestion de réseau (14), ayant ainsi une copie de version de configuration exacte stockée fonctionnant dans l'élément de réseau (12) également dans ledit système de gestion de réseau (14),
**caractérisé par** les étapes suivante :
- utiliser un interpréteur de logiciel pour changer automatiquement la configuration dudit élément de réseau (12) via le langage de commande, où l'interpréteur utilise une bibliothèque dynamique, laquelle bibliothèque est connectée à l'élément de réseau (12), où un code source compilé constitue la bibliothèque, qui définit des instructions de commande,
- changer uniquement une partie d'un logiciel de gestion lors de la mise à jour des configurations de l'élément de réseau, et déploiement uniquement des commandes nécessaires (20) à l'élément de réseau (12) plutôt qu'une configuration totalement nouvelle (18) qui pourrait exiger un redémarrage des applications ou des fonctions dans l'élément de réseau (12).

6. Procédé selon la revendication 5, **caractérisé par** l'étape supplémentaire suivante :
- examiner la nouvelle configuration pour vérifier que la sémantique et la syntaxe de commande sont correctes.

7. Procédé selon la revendication 5, **caractérisé par** l'étape supplémentaire suivante :
- reconnaitre des groupes de commandes de sorte que, pour adresser une configuration liée à un contexte spécifique, le contexte est fourni avant les lignes de commande configurant ce contexte dans une configuration de fonctionnement.

8. Système selon la revendication 5, **caractérisé par** les étapes supplémentaires suivantes :
- normaliser et vérifier des commandes à déployer sans que l'élément de réseau réel soit en ligne et accessible.
